# EUROPEAN PATENT APPLICATION

(11) **EP 3 697 148 A1**
(43) Date of publication of application: **19.08.2020**
(21) Application number: 18866220.9
(22) Date of filing: 09.10.2018
(51) Int. Cl.: H04W 72/04, H04W 28/16

(54) **USER TERMINAL AND WIRELESS COMMUNICATION METHOD**

(30) Priority: 10.10.2017 JP 2017207616
(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/037595
(87) International publication number: WO 2019/073966

(57) **Abstract**

To properly control transmission of uplink control information by use of an uplink shared channel transmitted independently from a transmission indication from a base station. A user terminal includes a transmitting section that multiplexes uplink control information on an uplink shared channel to be transmitted independently from an uplink (UL) transmission indication from a radio base station and transmits the multiplexed resultant, and a control section that adopts a certain transmission process configured in advance regardless of the number of bits of and/or a type of the uplink control information to control transmission of the uplink control information.

## Description

### Technical Field

The present disclosure relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency, and so on (see non-patent literature 1). Moreover, aiming at further wider band and higher speed than LTE, successor systems of LTE (referred to as, for example, LTE-A (LTE-Advanced), FRA (Future Radio Access), 4G, 5G, 5G +(plus), NR (New RAT), LTE Rel. 14, LTE Rel. 15 or later versions) are also under study.

In the existing LTE systems (for example, LTE Rel. 8 to Rel. 13), a DFT-s-OFDM (Discrete Fourier Transform-Spread-Orthogonal Frequency Division Multiplexing) waveform is supported in uplink (UL). The DFT-s-OFDM waveform, which is a single-carrier waveform, can prevent a peak to average power ratio (PAPR) from increasing.

In the existing LTE systems (for example, LTE Rel. 8 to Rel. 13), a user terminal transmits uplink control information (UCI) by use of a UL data channel (for example, PUSCH (Physical Uplink Shared Channel)) and/or a UL control channel (for example, PUCCH (Physical Uplink Control Channel)).

Transmission of the UCI is controlled based on whether or not simultaneous PUSCH and PUCCH transmission is configured and whether or not a PUSCH is scheduled at a TTI for transmitting the UCI. Transmission of the UCI by use of a PUSCH is also referred to as UCI on PUSCH.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), it is assumed that a configuration different from the existing LTE systems is used to control scheduling of data. For example, in order to provide communication services requiring lower latency and high reliability (for example, URLLC (Ultra Reliable and Low Latency Communication)), latency reduction is under study.

Specifically, in order to decrease a latency time until UL data transmission is started, a study is underway to permit contention of UL transmissions by a plurality of UEs to perform communication. For example, a study is underway to transmit, by the UE, the UL data independently from a UL grant from a radio base station (also referred to as UL grant-free (GF) transmission, UL grant-less transmission, contention-based UL transmission, or the like).

Here, in the existing LTE systems, in a case that an uplink data (UL data) transmission timing and a uplink control information (UCI) transmission timing overlap, an uplink shared channel (PUSCH) is used to transmit the UL data and the UCI (UCI on PUSCH). In the future radio communication systems also, it is contemplated that the PUSCH is used to transmit the UL data and the UCI similarly to the existing LTE systems (for example, transmission confirmation signals (also referred to as HARQ-ACK, ACK/NACK, and A/N) and the like).

However, in a case of UL grant-free transmission, how transmission process is to be made in a case that transmission of the uplink control information is performed by use of an uplink shared channel transmitted independently from a UL grant is still not under study. If transmission processes similar to the existing LTE systems are adopted, a communication throughput, a communication quality and the like may deteriorate.

Thus, the present disclosure has an object to provide a user terminal and a radio communication method capable of properly controlling transmission of uplink control information by use of an uplink shared channel transmitted independently from a transmission indication from a base station.

### Solution to Problem

A user terminal according to an aspect of the present disclosure includes a transmitting section that multiplexes uplink control information on an uplink shared channel to be transmitted independently from an uplink (UL) transmission indication from a radio base station and transmits the multiplexed resultant, and a control section that adopts a certain transmission process configured in advance regardless of the number of bits of and/or a type of the uplink control information to control transmission of the uplink control information.

### Advantageous Effects of Invention

According to an aspect of the present disclosure, it is possible to properly control transmission of uplink control information by use of an uplink shared channel transmitted independently from a transmission indication from a base station.

### Brief Description of Drawings

FIG. 1 is a diagram to show an example of control on UCI on PUSCH in the existing LTE;
FIG. 2 is a diagram to show an example of a configuration of GF transmission;
FIG. 3 is a diagram to show an example of the UCI on PUSCH in the GF transmission;
FIG. 4 is a diagram to show an example of transmission control on the UCI on PUSCH in the GF transmission;
FIG. 5 is a diagram to show another example of the transmission control on the UCI on PUSCH in the GF transmission;
FIG. 6 is a diagram to show another example of the transmission control on the UCI on PUSCH in the GF transmission;
FIG. 7 is a diagram to show an example of a schematic structure of a radio communication system according to an embodiment;
FIG. 8 is a diagram to show an example of an overall structure of a radio base station according to an embodiment;
FIG. 9 is a diagram to show an example of a functional structure of the radio base station according to an embodiment;
FIG. 10 is a diagram to show an example of an overall structure of a user terminal according to an embodiment;
FIG. 11 is a diagram to show an example of a functional structure of the user terminal according to an embodiment; and
FIG. 12 is a diagram to show an example of a hardware structure of the radio base station and the user terminal according to an embodiment.

### Description of Embodiments

In NR, a study is underway to use a time unit capable of changing a time length (for example, at least one of a slot, a mini-slot, and the certain number of symbols) as a scheduling unit of data channel (including a DL data channel and/or a UL data channel, also simply referred to as data and the like).

Here, the slot is a time unit based on a numerology the UE applies to transmission and/or reception (for example, a subcarrier spacing and/or a symbol length) The number of symbols per a slot may be defined depending on the subcarrier spacing. For example, in a case that the subcarrier spacing is 15 kHz or 30 kHz, the number of symbols per a slot may be 7 or 14 symbols. On the other hand, in a case that the subcarrier spacing is equal to or more than 60 kHz, the number of symbols per a slot may be 14 symbols.

The subcarrier spacing and the symbol length in a relationship of inverse number. For this reason, in a case of the same number of symbols per a slot, the higher (wider) the subcarrier spacing, the shorter the slot length, and the lower (narrower) the subcarrier spacing, the longer the slot length.

The mini-slot is a time unit shorter than the slot. The mini-slot may be constituted by a smaller number of symbols than the slot (for example, 1 to (slot length - 1) symbols, specifically, 2 or 3 symbols, for example). A numerology applied to the mini-slot in the slot may be the same as the slot (for example, the subcarrier spacing and/or the symbol length), or may be different from the slot (for example, the subcarrier spacing higher than the slot and/or the symbol length shorter than the slot).

In the future radio communication system, it is assumed that, in introducing a time unit different from the existing LTE system, a plurality of time units are applied to scheduling of the data and the like to control transmission and/or reception signals and/or channels (or, allocation and the like) In a case of scheduling the data and the like by use of different time units, a plurality of data transmission timings/transmission periods and the like may be conceivably generated. For example, a UE supporting a plurality of time units transmits and/or receives data scheduled in the different time units.

As an example, scheduling in a first time unit (for example, slot unit) (slot-based scheduling) and scheduling in a second time unit shorter than the first time unit (for example, non-slot unit) (non-slot-based scheduling) may be conceivably applied. The non-slot unit may be a mini-slot unit or a symbol unit. Note that the slot may include 7 symbols or 14 symbols, for example, and the mini-slot may include 1 to (slot length - 1) symbols.

In this case, the data transmission timings/transmission periods in a time direction are different depending on the scheduling unit for the data. For example, in a case of scheduling in slot units, one piece of data may be allocated per a slot. On the other hand, in a case of scheduling in the non-slot unit (mini-slot unit or symbol unit), data is optionally allocated in a part of a region in one slot. Accordingly, in the case of scheduling in non-slot units, a plurality of pieces of data can be allocated in one slot.

In the future radio communication system, it is assumed that transmission timing/transmission period of the data and the like is changeable every scheduling (transmission) in order to flexibly control the scheduling of the data and the like. For example, in scheduling in the non-slot unit, data (for example, PDSCH and/or PUSCH) may be allocated every scheduling across the certain number of symbols with an allocation position starting from any symbol.

Similarly to the data of which the transmission timing/transmission period is changeably controlled (for example, PDSCH and/or PUSCH), it is assumed that the UCI (for example, A/N) for that data may be also configured to be changeable in the transmission timing/transmission period for every transmission. For example, the base station uses a downlink control information and/or higher layer signaling and the like to specify the transmission timing/transmission period of the UCI for the UE. In this case, an A/N feedback timing is flexibly configured in a period after the downlink control information for reporting a transmission timing/transmission period of the A/N and/or corresponding PDSCH.

In this way, in the future radio communication system, it is assumed that one or both of a transmission timing/transmission period of the A/N for the DL data and the transmission timing/transmission period of the PUSCH are flexibly configured. On the other hand, UL communication requires to achieve low PAPR (Peak-to-Average Power Ratio) and/or low inter-modulation distortion (IMD).

A method for achieving the low PAPR and/or the low IMD in the UL communication includes a method of multiplexing the UCI and the UL data on the PUSCH to be transmitted (also referred to as UCI piggyback on PUSCH, UCI on PUSCH) in a case that the UCI transmission and the UL data (UL-SCH) transmission occur at the same timing.

In the existing LTE systems, in a case that the PUSCH is used to transmit the UL data and the UCI (for example, an A/N), a puncture process is performed on the UL data to multiplex the UCI on the puncture-processed resource. This is because a volume (or a ratio) of the UCI multiplexed on the PUSCH is not so large in the existing LTE system, and/or is for suppressing complexity of a reception process in the base station even in a case that a DL signal detection error occurs in the UE.

The puncture process on the data is to perform coding expecting that the resource allocated for the data can be utilized (or without consideration of an amount of an unavailable resource), but not map a coded symbol to an actually unavailable resource (for example, resource for the UCI) (that is, a room is made in the resource). On a receiving side, performance deterioration due to the puncturing can be suppressed by not using the coded symbol of the punctured resource in decoding.

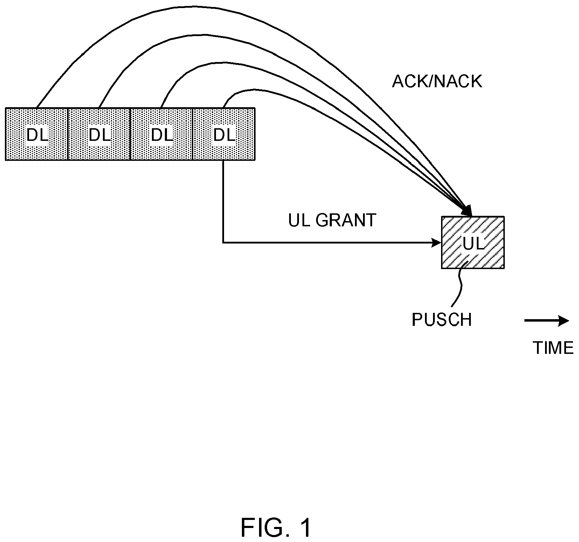

FIG. 1 is a diagram to show an example of control on UCI on PUSCH in the existing LTE. In this example, portions designated by "DL" or "UL" represent certain resources (for example, time/frequency resource), and a period of each portion corresponds to any time unit (for example, one or more slots, mini-slots, symbols, subframes and the like). This also applies to the following examples.

In a case of FIG. 1, the UE transmits ACKs/NACKs corresponding to shown four DL resources by use of a UL resource indicated by a certain UL grant. In the existing LTE, the UL grant is always reported at the last timing of a HARQ-ACK bundling window or subsequent timings.

Here, the HARQ-ACK bundling window may be referred to as a HARQ-ACK feedback window or merely a bundling window and the like, and corresponds to a period while an A/N feedback is performed at the same timing. For example, the UE determines that a certain period from a DL resource indicated by a certain DL assignment is the bundling window, and generates A/N bits corresponding to the window to control the feedback.

In the future radio communication system also, UCI on PUSCH may be employed similarly to the existing LTE system.

In NR, in order to attain the low latency communication, a study is underway, besides the UL grant-based transmission for transmitting the UL data based on the UL grant, to adopt the UL grant-free transmission for transmitting the UL data based on no UL grant.

In the UL grant-based transmission, the radio base station (also referred to as, for example, BS (Base Station), transmission/reception point (TRP), eNB (eNodeB), gNB (NR NodeB)) transmits a downlink control channel (UL grant) indicating allocation of the UL data (PUSCH (Physical Uplink Shared Channel), and the UE transmits the UL data in accordance with the UL grant.

On the other hand, in the UL grant-free transmission, the UE transmits the UL data without receiving a UL grant for scheduling the data. Hereinafter, the UL grant-free is also referred to as merely ULGF, GF PUSCH, GF or the like.

A physical layer (L1: Layer 1) signaling for activating the GF transmission (for example, a PDCCH (Physical Downlink Control Channel)) is also under study. Some types of control of the GF transmission are under study. For example, in type 1, the GF transmission is based on only an RRC (Radio Resource Control) configuration and does not use the L1 signaling.

In type 2, the GF transmission is based on both the RRC configuration and activation /deactivation through the L1 signaling.

In type 3, the GF transmission may be based on the RRC configuration, and configured parameters can be changed (overwritten) through the L1 signaling. Note that the GF transmission is not limited to these types. Some types (for example, types 2 and 3) may be used together. Hereinafter, a case is assumed that types 2 and 3 are used together as type 2.

An RRC configuration for the GF may be referred to as a GF configuration. The UE may support only one GF configuration or more than one GF configuration in one carrier. Note that the GF configuration may be referred to as a GF transmission configuration and the like. Parameters used for the GF transmission (also referred to as GF transmission parameters, GF parameters, and the like) are determined by the GF configuration.

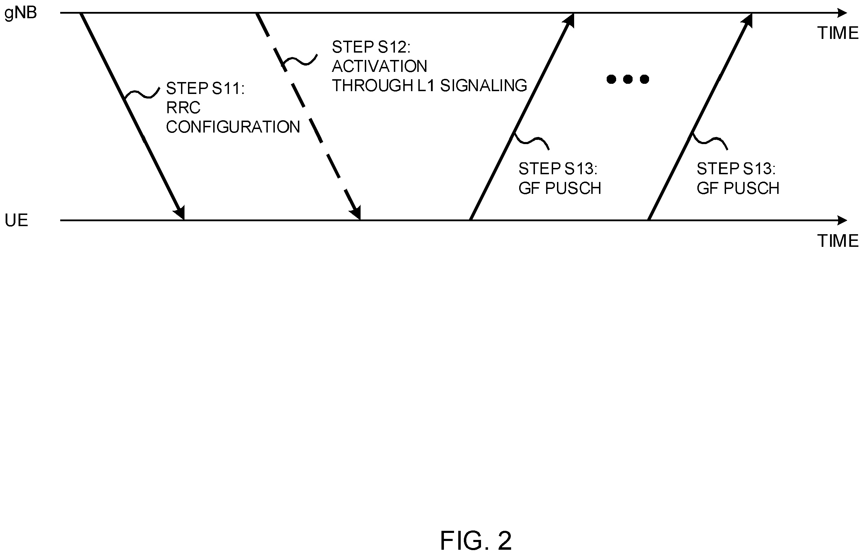

FIG. 2 is a diagram to show an example of a sequence of controlling the GF transmission. In step S11, the gNB sets the RRC configuration (GF configuration) for the UE. In step S12, the gNB performs activation for the UE through the L1 signaling. The L1 signaling may include information for updating values of the parameters of the RRC configuration (parameter update information). In a case that the GF transmission of type 1 is used, step S12 is omitted.

In step S13, the UE performs GF PUSCH transmission based on the GF configuration in step S11 (and the parameter update information in step S12). In a case that the GF transmission of type 2 and/or 3 is used, the L1 signaling indicating deactivation of the GF transmission and/or the parameter update information may be reported to the UE. In this way, the UE performs the GF transmission based on the RRC configuration and/or L1 signaling reported from the base station in advance.

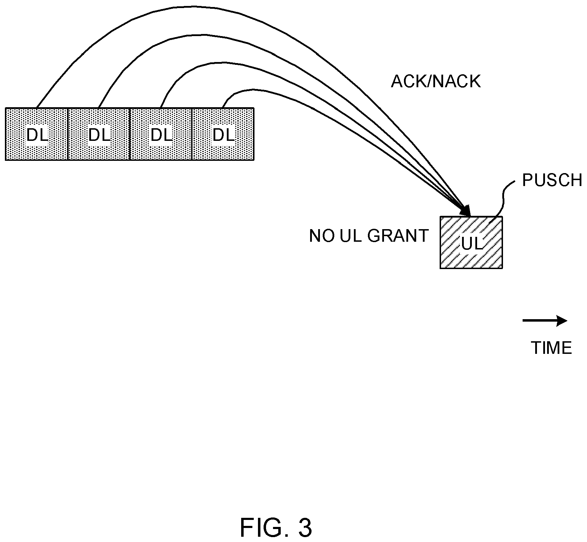

In this way, in a case that the UE is configured with the GF transmission, the UE can perform the PUSCH (for example, the UL data) transmission independently from the UL transmission indication (UL grant) from the base station. On the other hand, in a case of the PUSCH transmission based on no UL transmission indication, the UCI may be conceivably transmitted at a transmission timing of the PUSCH (see FIG. 3).

For example, in a case that the PUSCH is used to transmit the UCI (UCI on PUSCH) in a structure where scheduling is made in slot units, a processing method applied to the UL data and/or the UCI may be conceivably changed depending on the number of bits and/or type of the UCI. Examples of the processing method include a puncture process supported in the UCI on PUSCH in the existing LTE system (the first processing method), and additionally, a rate matching process of which support in the future radio communication system is under study (the second processing method). Of course, the processing method is not limited to these processes.

For example, in a case of an A/N where the UCI multiplexed on the PUSCH has certain bits (for example, 2 bits) or less, the puncture process is adopted. In this case, the UE punctures the UL data to multiplex the UCI.

In a case of an A/N where the UCI multiplexed on the PUSCH has certain bits (for example, 2 bits) or less, the rate-matching process is adopted. In this case, the UE rate-matches the UL data to multiplex the UCI.

The process of rate-matching the data is to control the number of bits after coded (coded bits) in consideration of actually available radio resources. In a case that the number of coded bits is smaller than the number of bits mappable to the actually available radio resources, at least some of the coded bits may be repeated. In a case that the number of coded bits is larger than the number of mappable bits, some of coded bits may be deleted.

The rate-matching process on the UL data in consideration of an actually available radio resource allows coding at a higher coding rate as compared with the puncture process (with a high performance). Therefore, for example, adopting the rate matching process in place of the puncture process in a case of a large payload size of the UCI allows the UL signals to be generated with a higher quality, improving a communication quality.

In the case that the UL grant is used to report the UL data (PUSCH) transmission from the base station to the UE, the base station can report the UL grant on conditions used for the transmission of the UCI on PUSCH. The conditions used for the transmission of the UCI on PUSCH include at least one of the number of A/N bits, a pattern applied to the rate matching, and information on a fed back A/N.

The pattern applied to the rate matching is UL data on which the rate matching is performed and/or a position of the multiplexed UCI (for example, a resource, a resource pattern, and the like) and may be referred to as a rate matching pattern. Furthermore, the conditions used for the transmission of the UCI on PUSCH may include information on the puncture process in addition to the information on the rate matching process.

In the case of the UCI on PUSCH adopting the rate matching process, the UE selects the rate matching pattern and the like based on the information reported from the base station to perform the transmission. The base station controls the reception process of the PUSCH expecting that the PUSCH to which the pattern reported using the UL grant is applied is transmitted from the UE. In this case, the base station performs the reception expecting a certain rate matching pattern, reducing a load of the reception process on the base station.

On the other hand, in a case that the UCI transmission is performed using the PUSCH transmission based on no UL grant, the base station cannot report transmission conditions for the UCI on PUSCH (for example, rate matching pattern) and the like using the UL grant to the UE.

In this case, since the base station cannot grasp in advance the rate matching pattern and the like applied by the UE to the UL transmission, the base station needs to expect a plurality of rate matching patterns the UE possibly apply and blind-decodes the PUSCH to perform the reception process. As a result, the load of the reception process on the base station may possibly increase to increase the communication throughput.

Then, the inventors of the present invention focused on an issue that predefining the transmission conditions applied to the UCI on PUSCH allows the transmission condition to be recognized between the base station and the UE, and came up with the idea of adopting a certain transmission condition (or, a certain transmission process method) in the case that the UCI is multiplexed on the PUSCH transmitted based on no UL transmission indication.

For example, the UE adopts a certain transmission process method configured in advance regardless of the number of bits and/or type of the uplink control information to control the transmission of the uplink control information. Alternatively, a certain transmission condition may be, for example, a transmission condition different from in the case that the UCI is multiplexed on the PUSCH transmitted based on the UL transmission indication.

This can suppress increase in the load of the reception process on the base station and suppress increase in the communication throughput by applying a certain condition to the UL transmission even in the case that the base station cannot report a part or all of the information on the transmission conditions of the UCI on PUSCH to the UE.

Hereinafter, an embodiment according to the present invention will be described in detail. The embodiments described below may be employed independently or in combination. Note that in the present embodiments, the UCI may include at least one of a scheduling request (SR), transmission confirmation information for a DL data channel (for example, PDSCH (Physical Downlink Shared Channel)) (also referred to as HARQ-ACK (Hybrid Automatic Repeat reQuest-Acknowledge), ACK or NACK (Negative ACK), or A/N, and the like), channel state information (CSI) including a CQI (Channel Quality Indicator) and rank information (RI (Rank Indicator), beam index information (BI), and a buffer status report (BSR).

Note that the rate matching process on the data may be expressed as the rate matching process on the data channel (for example, the PUSCH). Moreover, the puncture process on the data may be expressed as the puncture process on the data channel. The following description is given using a case of scheduling in slot units as an example, but the present embodiment is not limited thereto. This may be similarly applied to a case that another period is used as a transmission unit.

### (First Aspect)

In a first aspect, in a case that the UCI is multiplexed on the PUSCH transmitted by the UE based on no UL transmission indication from the base station, a certain transmission process (for example, rate matching process) is adopted.

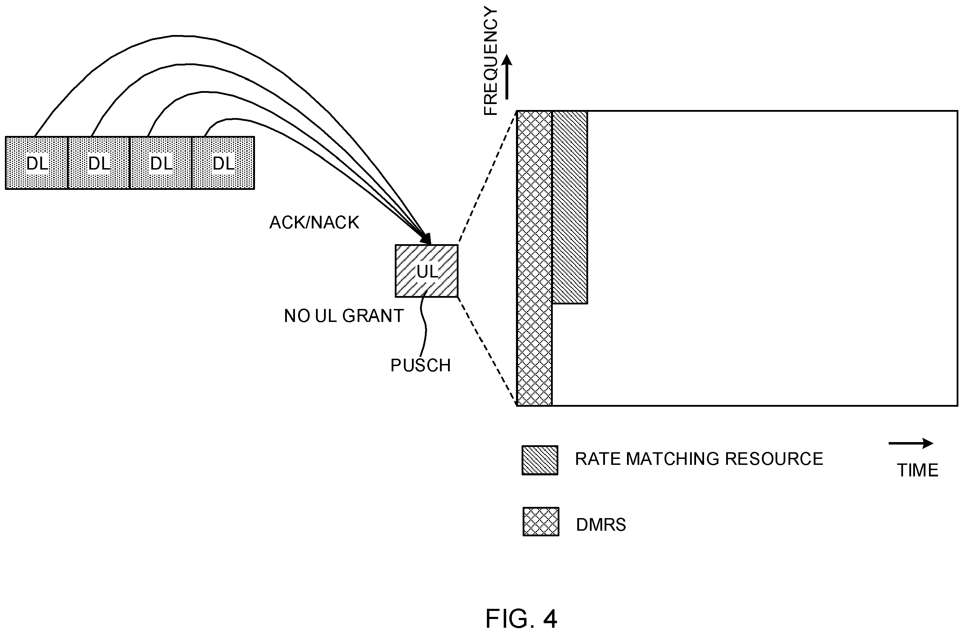

For example, the UE applies the rate matching process always (for example, regardless of the type and/or the number of bits of the UCI) to the UL data (see FIG. 4). In this case, conditions applied to the rate matching process (for example, a rate matching pattern and/or an amount of resources on which the rate matching process is performed, and the like) are conditions configured in advance.

Information on the conditions applied to the rate matching process may be reported from the base station to the UE in advance, or defined in a specification. In a case of reporting from the base station to the UE, a reporting method may be changed depending on a configuration type of the UL grant-free transmission (GF transmission).

In a case that the UE is configured with the GF transmission of type 1, the base station may report to the UE of the information on the conditions applied to the rate matching process by use of higher layer signaling (for example, RRC signaling and the like). For example, the base station, in configuring (activating) the GF transmission in the UE by use of higher layer signaling, reports together information on the conditions used for the UCI on PUSCH (for example, applying condition of the rate matching process) to the UE.

In a case that the UE is configured with the GF transmission of type 2, the base station may report to the UE of the information on the conditions applied to the rate matching process by use of higher layer signaling and/or the downlink control information (DCI). For example, the base station, in configuring (activating) the GF transmission in the UE by use of the DCI, reports together information on the applying condition of the rate matching process to the UE. Alternatively, in the case of type 2 also, higher layer signaling may be used similarly to type 1.

In this way, by controlling the conditions for the UCI on PUSCH by use of the information included in the higher layer signaling and/or downlink control information that the UE receives when the GF transmission is configured (for example, activated), the recognition can be shared between the UE and the base station. This eliminates the need for the base station side to expect all possible rate matching patterns for performing the reception process, which can reduce the load of the reception process on the base station side and improve the communication throughput.

In a case that there is UCI (for example, an A/N) multiplexed on the PUSCH transmitted based on no UL transmission indication, the A/N may be controlled to be multiplexed on a resource where the UL data is rate-matched.

The UE may not expect that an A/N exceeding a certain value is multiplexed. Specifically, the UE may expect that an A/N exceeding a certain value is not multiplexed (or, an A/N equal to or less than a certain value is multiplexed) on the PUSCH transmitted based on no UL transmission indication to perform the transmission process.

In the case of multiplexing the UCI on the PUSCH transmitted based on no UL transmission indication, the UE may separately control the conditions for the rate matching process based on the type and/or the number of bits of the UCI. For example, in a case that the UCI includes the A/N and the CSI, the UE performs the multiplexing on the PUSCH adopting the different rate matching patterns and/or the different rate matching resource amounts. The rate matching resource amount refers to an amount of resources to which the rate matching is applied.

Specifically, in the case that the UCI is the A/N (or, the number of bits is equal to or less than a certain value), the UE adopts a first rate matching pattern and/or a first rate matching resource amount to control the UCI multiplexing. In the case that the UCI is the CSI (or, the number of bits is more than a certain value), the UE adopts a second rate matching pattern and/or a second rate matching resource amount to control the UCI multiplexing. Note that the first rate matching pattern and the second rate matching pattern may be reported to the UE in advance by use of higher layer signaling and/or the downlink control information as described above.

In this way, in the case that the UCI is multiplexed on the PUSCH transmitted based on no UL transmission indication, the conditions for the rate matching process are configured separately based on the type and/or the number of bits of the UCI, which can flexibly control the transmission process depending on a communication situation.

### (Second Aspect)

In a second aspect, in a case that the UCI (for example, an A/N) is multiplexed on the PUSCH transmitted by the UE based on no UL transmission indication from the base station, a certain transmission process (for example, puncture process) is adopted regardless of the number of bits of the multiplexed UCI.

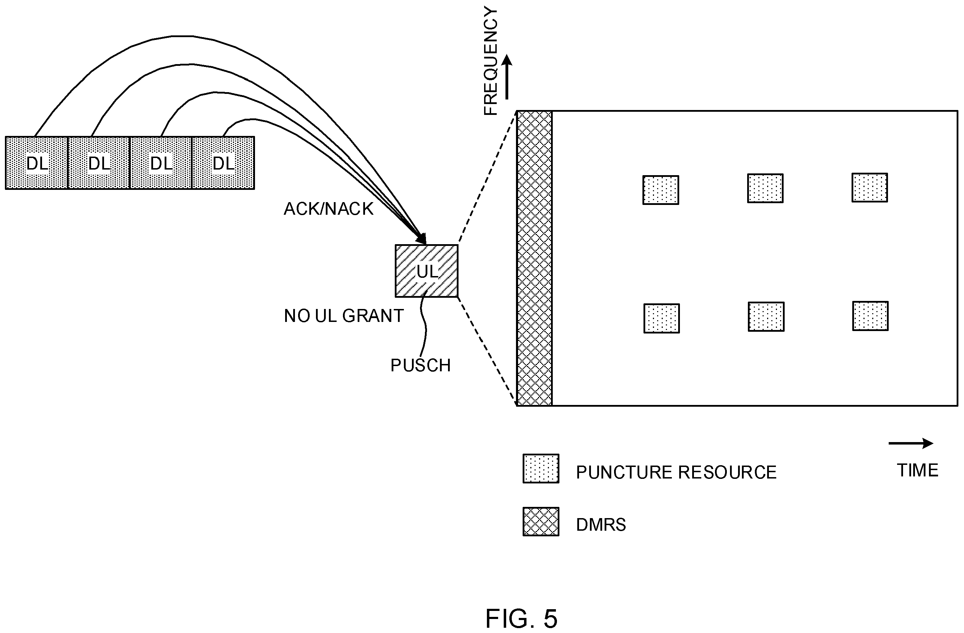

For example, in a case that an A/N is multiplexed on the PUSCH transmitted based on no UL transmission indication (or, in a case that there is an A/N multiplexible on the PUSCH), the UE applies the puncture process to the UL data to transmit the A/N regardless of the number of bits of the UCI (see FIG. 5).

Conditions applied to the puncture process (for example, a puncture pattern and/or an amount of resources on which the puncture process is performed, and the like) may be determined based on the number of bits of the A/N. For example, in a case that the number of A/N bits to be multiplexed increases, an amount of resources to which the puncture process is applied may be configured to increase.

The puncture pattern corresponding to the number of A/N bits to be multiplexed and/or the amount of resources to which the puncture process is applied may be configured to predefined in the specification, or reported from the base station to the UE. In the case of reporting from the base station to the UE, reporting may be made similarly to the information on the conditions applied to the rate matching process in the first aspect.

The control may be made such tat the number of bits of of the A/N multiplexed on the PUSCH transmitted based on no UL transmission indication is equal to or less than a certain value (for example, 2 bits). In this case, the UE expects that an A/N exceeding a certain value is not multiplexed (or, an A/N equal to or less than a certain value is multiplexed) on the PUSCH transmitted based on no UL transmission indication to perform the transmission process.

In other words, the UCI multiplexed with the UL data being punctured may have the certain number of bits or less. In this case, an A/N exceeding the certain number of bits may be configured not to be multiplexed on the PUSCH, or an A/N exceeding the certain number of bits may be configured to be multiplexed on the UCI adopting the rate matching process. In this case, the rate matching process may use the first aspect.

In this way, in the case that the UCI is multiplexed on the PUSCH transmitted based on no UL transmission indication, the conditions for the puncture process are configured based on the type and/or the number of bits of the UCI, which can flexibly control the transmission process depending on a communication situation.

### (Third Aspect)

In a third aspect, in the case that the UCI (for example, an A/N) is multiplexed on the PUSCH transmitted by the UE based on no UL transmission indication from the base station, a process applied to the UL transmission is controlled based on a transmission timing of a downlink shared channel (PDSCH) for each A/N.

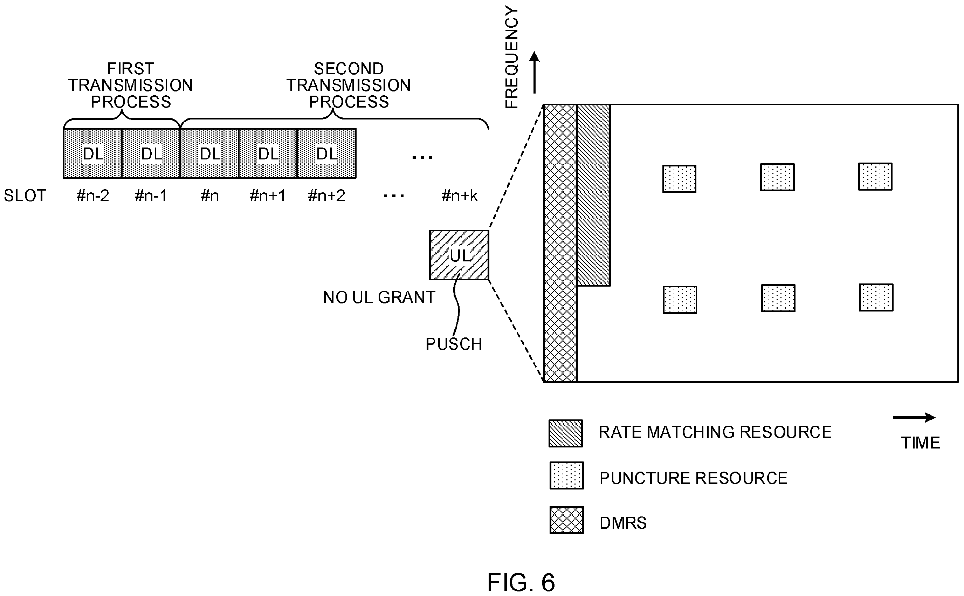

For example, assume a case that the UE transmits the PUSCH at a certain timing (here, slot #n+k) based on no UL transmission indication (see FIG. 6). FIG. 6 shows a case that the UE multiplexes an A/N corresponding to the DL data (PDSCH) transmitted in each of a plurality of slots on the PUSCH in the slot #n+k

In this case, the transmission process applied to an A/N corresponding to the PDSCH transmitted at or before the certain timing (for example, in the slots n, n-1, n-1, ...) may be different from the transmission process applied to an A/N corresponding to the PDSCH transmitted after the certain timing (for example, in the slots n+1, n+2, ..., n+k). For example, a first transmission process may be applied to the A/N corresponding to the PDSCH transmitted at or before the certain timing, and a second transmission process is applied to the A/N corresponding to the PDSCH transmitted after the certain timing.

As the first transmission process, for example, the puncture process or the rate matching process is applied to the A/N corresponding to the PDSCH transmitted at or before the certain timing (for example, in the slots n, n-1, n-1, ...) depending on the number of bits of the A/N to be multiplexed. The puncture process may be applied in a case that the A/N to be multiplexed has 2 bits or less (or, for the A/N has up to 2 bits), and the rate matching process may be applied in other cases.

The puncture process may adopt the method described above in the second aspect. The rate matching process may adopt the method described above in the first aspect.

As the second transmission process, for example, the puncture process is applied to the A/N corresponding to the PDSCH transmitted after the certain timing (for example, in the slots n+1, n+2, ..., n+k) regardless of the number of bits of of the A/N to be multiplexed. The puncture process may adopt the method described above in the second aspect.

The transmission control on the A/N shown in FIG. 6 may be the same as the control method in the case that A/N transmission is controlled based on the UL transmission indication reported in the slot n.

As described above, the UL processing method is switched and controlled based on the transmission timing of the signal corresponding to the UCI (for example, the PDSCH corresponding to the A/N), and thus, the puncture process can be adopted in a case that the transmission period from the PDSCH reception to the A/N is short. This can reduce the load of the process on the UE side.

### (Fourth Aspect)

In a fourth aspect, beta offset (β_{offset}) is controlled depending on the type of the GF configuration.

In the existing LTE, a UCI resource is controlled by a value of the beta offset. Here, the beta offset is semi-statically configured with one value per a UCI type (HARQ-ACK, CSI, and the like). The beta offset may be referred to as information on the UCI resource.

The beta offset may be controlled based on a type of the UL data transmission based on no UL grant. The beta offset may be an offset value used for coding the UCI (channel coding). The beta offset may be configured for each UCI type (for example, HARQ-ACK and/or CSI).

For example, with respect to the UL data transmission of type 1 based on no UL grant, the beta offsets for the A/N and the CSI are configured through RRC signaling. Alternatively, the beta offset configured through RRC signaling with respect to the UL data based on the UL grant may be reused.

With respect to the UL data transmission of type 2 based on no UL grant, the beta offsets for the A/N and the CSI are configured through RRC signaling. Alternatively, the beta offset may be dynamically indicated in the UL grant, or specified through a combination of RRC signaling and L1 signaling.

### (Radio Communication System)

Hereinafter, a structure of a radio communication system according to an embodiment will be described. In this radio communication system, at least one combination of the above plurality of aspects is used to perform communication.

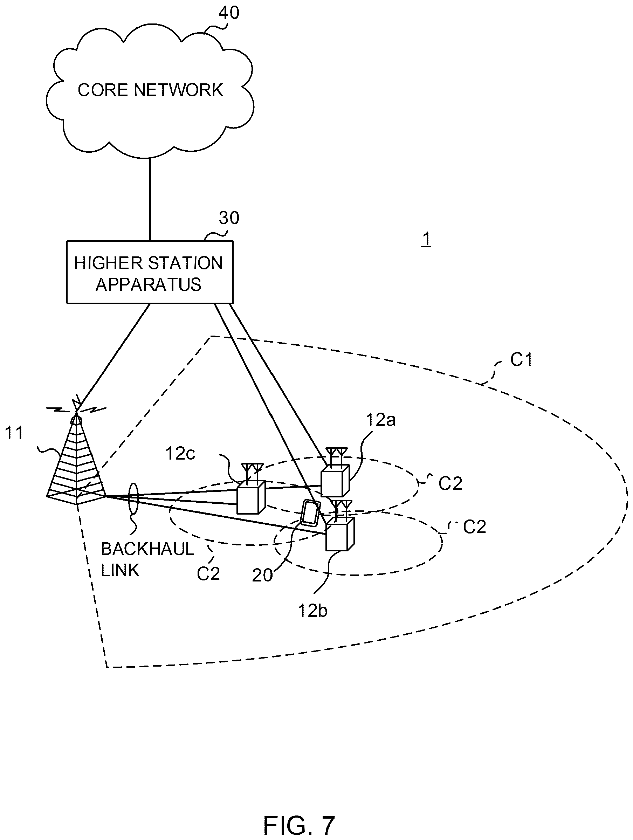

FIG. 7 is a diagram to show an example of a schematic structure of the radio communication system according to an embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred to as a system implementing these.

The radio communication system 1 includes a radio base station 11 that forms a macro cell C1 of a relatively wide coverage, and radio base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cell and user terminal 20 are by no means limited to the aspect shown in the diagram.

The user terminals 20 can connect with both the radio base station 11 and the radio base stations 12. It is assumed that the user terminals 20 use the macro cell C1 and the small cells C2 at the same time by means of CA or DC. Also, the user terminal 20 may adopt the CA or the DC by using a plurality of cells (CCs) (for example, five or less CCs, six or more CCs).

Between the user terminals 20 and the radio base station 11, communication can be carried out by using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, and so on) and a wide bandwidth may be used, or the same carrier as that used between the user terminals 20 and the radio base station 11 may be used. Note that the structure of the frequency band for use in each radio base station is by no means limited to these.

The user terminals 20 can perform communication by using time division duplex (TDD) and/or frequency division duplex (FDD) in each cell. Furthermore, in each cell (carrier), a single numerology may be employed, or a plurality of different numerologies may be employed.

The term "numerology" may refer to communication parameters applied to transmission and/or reception of a certain signal and/or channel, and may indicate, for example, at least one of a subcarrier spacing, a bandwidth, a symbol length, a cyclic prefix length, a subframe length, a TTI length, the number of symbols per TTI, a radio frame structure, a filtering process, a windowing process, and so on.

A wired connection (for example, means in compliance with the CPRI (Common Public Radio Interface) such as an optical fiber, an X2 interface and so on) or a wireless connection may be established between the radio base station 11 and the radio base stations 12 (or between two radio base stations 12).

The radio base station 11 and the radio base stations 12 are each connected with a higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. The radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter, the radio base stations 11 and 12 will be collectively referred to as "radio base stations 10," unless specified otherwise.

Each of the user terminals 20 is a terminal that supports various communication schemes such as LTE and LTE-A, and may include not only mobile communication terminals (mobile stations) but stationary communication terminals (fixed stations).

In the radio communication system 1, as radio access schemes, orthogonal frequency division multiple access (OFDMA) is applied to the downlink, and single carrier frequency division multiple access (SC-FDMA) and/or OFDMA is applied to the uplink.

OFDMA is a multi-carrier communication scheme to perform communication by dividing a frequency band into a plurality of narrow frequency bands (subcarriers) and mapping data to each subcarrier. SC-FDMA is a single carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel), which is used by each user terminal 20 on a shared basis, a broadcast channel (PBCH (Physical Broadcast Channel)), downlink L1/L2 control channels and so on, are used as downlink channels. User data, higher layer control information, SIBs (System Information Blocks) and so on are communicated on the PDSCH. The MIBs (Master Information Blocks) are communicated on the PBCH.

The downlink L1/L2 control channels include at least one of the downlink control channels (PDCCH (Physical Downlink Control Channel) and/or EPDCCH (Enhanced Physical Downlink Control Channel), a PCFICH (Physical Control Format Indicator Channel), and a PHICH (Physical Hybrid-ARQ Indicator Channel). Downlink control information (DCI), including PDSCH and/or PUSCH scheduling information, and so on are communicated on the PDCCH.

Note that the scheduling information may be reported by the DCI. For example, the DCI scheduling DL data reception may be referred to as "DL assignment," and the DCI scheduling UL data transmission may be referred to as "UL grant."

The number of OFDM symbols to use for the PDCCH is communicated on the PCFICH. Transmission confirmation information (for example, also referred to as "retransmission control information," "HARQ-ACK," "ACK/NACK," and so on) of HARQ (Hybrid Automatic Repeat reQuest) to a PUSCH is transmitted on the PHICH. The EPDCCH is frequency-division multiplexed with the PDSCH (downlink shared data channel) and used to communicate DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)) and so on are used as uplink channels. User data, higher layer control information and so on are communicated on the PUSCH. Downlink radio link quality information (CQI (Channel Quality Indicator)), transmission confirmation information, a scheduling request (SR), and so on are communicated on the PUCCH. By means of the PRACH, random access preambles for establishing connections with cells are communicated.

In the radio communication system 1, a cell-specific reference signal (CRS), a channel state information-reference signal (CSI-RS), a demodulation reference signal (DMRS), a positioning reference signal (PRS), and so on are transmitted as downlink reference signals. In the radio communication system 1, a measurement reference signal (SRS (Sounding Reference Signal)), a demodulation reference signal (DMRS), and so on are transmitted as uplink reference signals. Note that DMRS may be referred to as a "user terminal specific reference signal (UE-specific Reference Signal)." Transmitted reference signals are by no means limited to these.

In the radio communication system 1, the synchronization signal (for example, PSS (Primary Synchronization Signal)/SSS (Secondary Synchronization Signal)), a broadcast channel (PBCH (Physical Broadcast Channel)) and the like are communicated. Note that the synchronization signal and the PBCH may be transmitted in a synchronization signal block (SSB).

### <Radio Base Station>

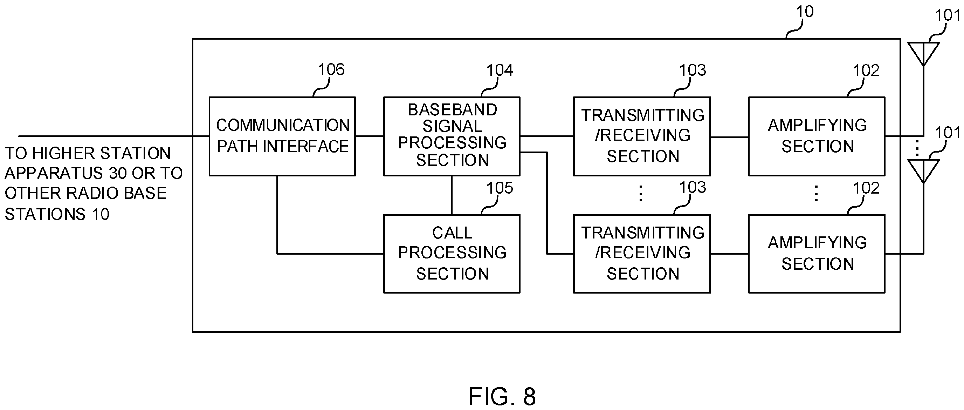

FIG. 8 is a diagram to show an example of an overall structure of a radio base station according to an embodiment. A radio base station 10 includes a plurality of transmitting/receiving antennas 101, amplifying sections 102, transmitting/receiving sections 103, a baseband signal processing section 104, a call processing section 105 and a transmission line interface 106. Note that the radio base station 10 may be configured to include one or more transmitting/receiving antennas 101, one or more amplifying sections 102 and one or more transmitting/receiving sections 103.

User data to be transmitted from the radio base station 10 to the user terminal 20 by the downlink is input from the higher station apparatus 30 to the baseband signal processing section 104, via the transmission line interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processes such as channel coding and inverse fast Fourier transform, and the result is forwarded to each transmitting/receiving section 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. The transmitting/receiving sections 103 can include transmitters/receivers, transmitting/receiving circuits or transmitting/receiving apparatus that can be described based on general understanding of the technical field to which the present disclosure pertains. Note that each transmitting/receiving section 103 may be structured as a transmitting/receiving section in one entity, or may be constituted with a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the transmission line interface 106. The call processing section 105 performs call processing (setting up, releasing and so on) for communication channels, manages the state of the radio base station 10, manages the radio resources and so on.

The transmission line interface 106 transmits and/or receives signals to and/or from the higher station apparatus 30 via a certain interface. The transmission line interface 106 may transmit and/or receive signals (backhaul signaling) with other radio base stations 10 via an inter-base station interface (for example, an optical fiber in compliance with the CPRI (Common Public Radio Interface) and an X2 interface).

Note that each transmitting/receiving section 103 may further include an analog beamforming section performing analog beamforming. The analog beamforming section can include an analog beamforming circuit (for example, a phase shifter, a phase shift circuit), or an analog beamforming apparatus (for example, a phase shift device) that can be described based on general understanding of the technical field to which the present invention pertains. The transmitting/receiving antennas 101 can be formed of an antenna array, for example. Each transmitting/receiving section 103 may be configured to adopt a single BF and a multi BF.

Each transmitting/receiving section 103 may transmit a signal using a transmission beam, or may receive a signal using a reception beam. Each transmitting/receiving section 103 may transmit and/or receive a signal using a certain beam determined by the control section 301.

Each transmitting/receiving section 103 receives the UL data and/or the UCI included in the PUSCH transmitted from the UE independently from the UL transmission indication (for example, the UL grant). Each transmitting/receiving section 103 reports to the UE of the information on the conditions in the case that the UCI is multiplexed on the PUSCH through higher layer signaling and/or the DCI.

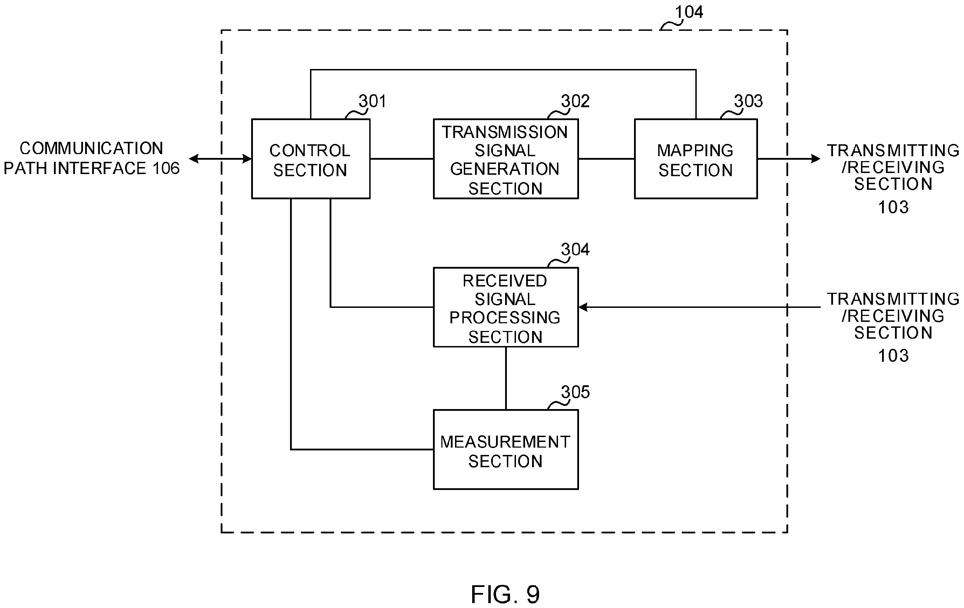

FIG. 9 is a diagram to show an example of a functional structure of the radio base station according to an embodiment Note that, this example primarily shows functional blocks that pertain to characteristic parts of an embodiment, and it is assumed that the radio base station 10 may include other functional blocks that are necessary for radio communication as well.

The baseband signal processing section 104 at least includes a control section (scheduler) 301, a transmission signal generation section 302, a mapping section 303, a received signal processing section 304, and a measurement section 305. Note that these structures may be included in the radio base station 10, and some or all of the structures do not need to be included in the baseband signal processing section 104.

The control section (scheduler) 301 controls the whole of the radio base station 10. The control section 301 can include a controller, a control circuit or control apparatus that can be described based on general understanding of the technical field to which the present disclosure pertains.

The control section 301, for example, controls the generation of signals in the transmission signal generation section 302, the mapping of signals by the mapping section 303, and so on. The control section 301 controls the signal receiving processes in the received signal processing section 304, the measurements of signals in the measurement section 305, and so on.

The control section 301 controls the scheduling (for example, resource allocation) of system information, a downlink data signal (for example, a signal transmitted on the PDSCH), a downlink control signal (for example, a signal transmitted on the PDCCH and/or the EPDCCH. Transmission confirmation information, and so on). Based on the results of determining necessity or not of retransmission control to the uplink data signal, or the like, the control section 301 controls generation of a downlink control signal, a downlink data signal, and so on.

The control section 301 controls the scheduling of a synchronization signal (for example, PSS/SSS), a downlink reference signal (for example, CRS, CSI-RS, DMRS), and so on.

The control section 301 may control forming the transmission beam and/or the reception beam using a digital BF (for example, precoding) by the baseband signal processing section 104 and/or an analog BF (for example, phase rotation) by the transmitting/receiving section 103.

The control section 301 may control applying a depuncture process and/or the rate matching process to the received uplink data based on a reception timing, in the user terminal 20, of a transmission indication for the uplink shared channel (for example, the PUSCH) (for example, the UL grant).

The transmission signal generation section 302 generates downlink signals (downlink control signals, downlink data signals, downlink reference signals and so on) based on commands from the control section 301 and outputs the downlink signals to the mapping section 303. The transmission signal generation section 302 can include a signal generator, a signal generation circuit or signal generation apparatus that can be described based on general understanding of the technical field to which the present disclosure pertains.

For example, the transmission signal generation section 302 generates DL assignment to report assignment information of downlink data and/or UL grant to report assignment information of uplink data, based on commands from the control section 301. The DL assignment and the UL grant are both DCI, and follow the DCI format. For a downlink data signal, encoding processing, modulation processing, and the like are performed in accordance with a coding rate, modulation scheme, or the like determined based on channel state information (CSI) from each user terminal 20.

The mapping section 303 maps the downlink signals generated in the transmission signal generation section 302 to certain radio resources, based on commands from the control section 301, and outputs these to the transmitting/receiving sections 103. The mapping section 303 can include a mapper, a mapping circuit or mapping apparatus that can be described based on general understanding of the technical field to which the present disclosure pertains.

The received signal processing section 304 performs receiving processes (for example, demapping, demodulation, decoding and so on) of received signals that are input from the transmitting/receiving sections 103. Here, the received signals are, for example, uplink signals that are transmitted from the user terminals 20 (uplink control signals, uplink data signals, uplink reference signals and so on). The received signal processing section 304 can include a signal processor, a signal processing circuit or signal processing apparatus that can be described based on general understanding of the technical field to which the present disclosure pertains.

The received signal processing section 304 outputs the decoded information acquired through the receiving processes to the control section 301. For example, if the received signal processing section 304 receives the PUCCH including HARQ-ACK, the received signal processing section 304 outputs the HARQ-ACK to the control section 301. The received signal processing section 304 outputs the received signals and/or the signals after the receiving processes to the measurement section 305.

The measurement section 305 conducts measurements with respect to the received signals. The measurement section 305 can include a measurer, a measurement circuit or measurement apparatus that can be described based on general understanding of the technical field to which the present disclosure pertains.

For example, the measurement section 305 may perform RRM (Radio Resource Management) measurement, CSI (Channel State Information) measurement, and so on, based on the received signal. The measurement section 305 may measure a received power (for example, RSRP (Reference Signal Received Power)), a received quality (for example, RSRQ (Reference Signal Received Quality), an SINR (Signal to Interference plus Noise Ratio), an SNR (Signal to Noise Ratio)), a signal strength (for example, RSSI (Received Signal Strength Indicator)), channel information (for example, CSI), and so on. The measurement results may be output to the control section 301.

### <User Terminal>

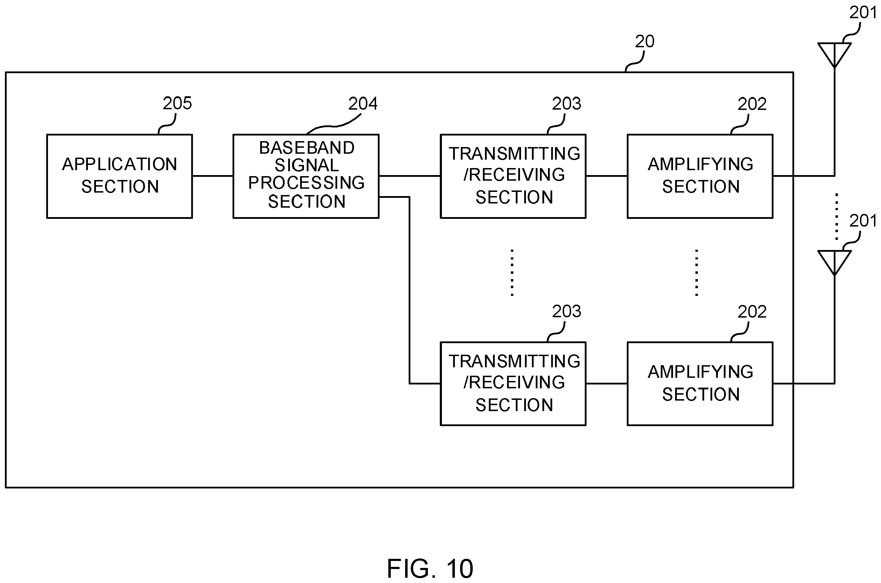

FIG. 10 is a diagram to show an example of an overall structure of a user terminal according to an embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. The transmitting/receiving sections 203 can include transmitters/receivers, transmitting/receiving circuits or transmitting/receiving apparatus that can be described based on general understanding of the technical field to which the present disclosure pertains. Note that each transmitting/receiving section 203 may be structured as a transmitting/receiving section in one entity, or may include a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processes related to higher layers above the physical layer and the MAC layer, and so on. In the downlink data, broadcast information may be also forwarded to the application section 205.

Meanwhile, the uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

Note that each transmitting/receiving section 203 may further include an analog beamforming section performing analog beamforming. The analog beamforming section can include an analog beamforming circuit (for example, a phase shifter, a phase shift circuit), or an analog beamforming apparatus (for example, a phase shift device) that can be described based on general understanding of the technical field to which the present invention pertains. The transmitting/receiving antennas 201 can be formed of an antenna array, for example. Each transmitting/receiving section 203 is configured to adopt a single BF and a multi BF.

Each transmitting/receiving section 203 multiplexes the UCI on the PUSCH to be transmitted independently from the UL transmission indication (for example, the UL grant) and transmits the resultant. Each transmitting/receiving section 203 receives the information on the conditions in the case that the UCI is multiplexed on the PUSCH through higher layer signaling and/or the DCI.

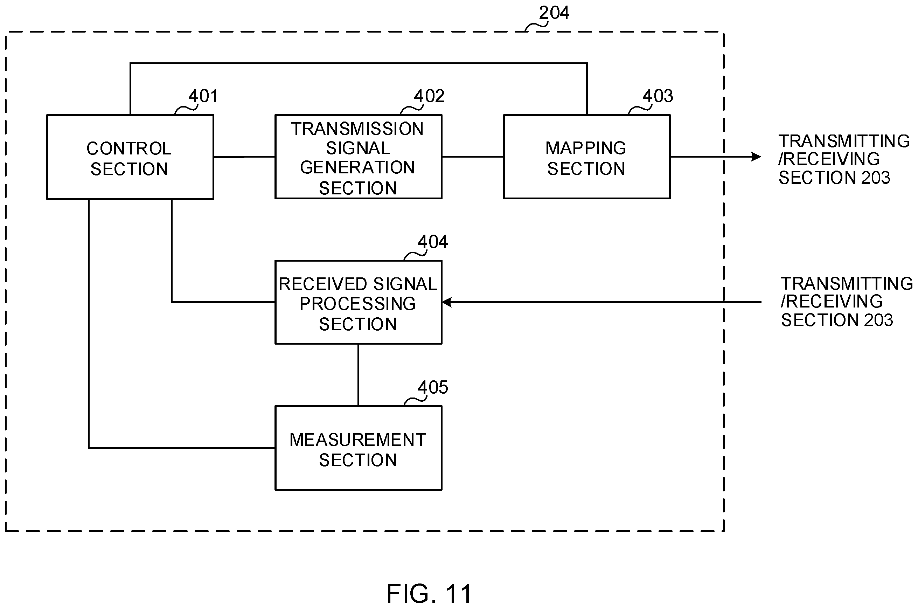

FIG. 11 is a diagram to show an example of a functional structure of the user terminal according to an embodiment. Note that, this example primarily shows functional blocks that pertain to characteristic parts of an embodiment, and it is assumed that the user terminal 20 may include other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can include a controller, a control circuit or control apparatus that can be described based on general understanding of the technical field to which the present disclosure pertains.

The control section 401, for example, controls the generation of signals in the transmission signal generation section 402, the mapping of signals by the mapping section 403, and so on. The control section 401 controls the signal receiving processes in the received signal processing section 404, the measurements of signals in the measurement section 405, and so on.

The control section 401 acquires a downlink control signal and a downlink data signal transmitted from the radio base station 10, from the received signal processing section 404. The control section 401 controls generation of an uplink control signal and/or an uplink data signal, based on the results of determining necessity or not of retransmission control to a downlink control signal and/or a downlink data signal.

The control section 401 controls multiplexing of the uplink control information on the uplink shared channel to be transmitted independently from an uplink (UL) transmission indication from the radio base station, and transmitting the resultant. For example, the control section 401 adopts a certain transmission process configured in advance regardless of the number of bits and/or type of the uplink control information to control the transmission of the uplink control information. For example, the control section 401 may perform the rate matching process regardless of the type and/or the number of bits of the uplink control information. The control section 401 may adopt the rate matching process using the rate matching patterns and/or certain resource amounts different depending on the type and/or the number of bits of the uplink control information.

Alternatively, the control section 401 may control the puncture pattern to be adopted based on the number of bits of the transmission confirmation signal and/or the amount of punctured resources. The control section 401 may expect that the number of bits of the transmission confirmation signal to be multiplexed is equal to or less than a certain value.

In a case that a transmission confirmation signal is multiplexed on the uplink shared channel to be transmitted at a certain timing independently from the uplink transmission indication from the radio base station, the control section 401 may change the process applied to each transmission confirmation signal based on a reception timing of the downlink shared channel (PDSCH) corresponding to each transmission confirmation signal.

The transmission signal generation section 402 generates uplink signals (uplink control signals, uplink data signals, uplink reference signals and so on) based on commands from the control section 401, and outputs the uplink signals to the mapping section 403. The transmission signal generation section 402 can include a signal generator, a signal generation circuit or signal generation apparatus that can be described based on general understanding of the technical field to which the present disclosure pertains.

For example, the transmission signal generation section 402 generates an uplink control signal about transmission confirmation information, the channel state information (CSI), and so on, based on commands from the control section 401. The transmission signal generation section 402 generates uplink data signals, based on commands from the control section 401. For example, when a UL grant is included in a downlink control signal that is reported from the radio base station 10, the control section 401 commands the transmission signal generation section 402 to generate the uplink data signal.

The mapping section 403 maps the uplink signals generated in the transmission signal generation section 402 to radio resources, based on commands from the control section 401, and outputs the result to the transmitting/receiving sections 203. The mapping section 403 can include a mapper, a mapping circuit or mapping apparatus that can be described based on general understanding of the technical field to which the present disclosure pertains.

The received signal processing section 404 performs receiving processes (for example, demapping, demodulation, decoding and so on) of received signals that are input from the transmitting/receiving sections 203. Here, the received signals are, for example, downlink signals transmitted from the radio base station 10 (downlink control signals, downlink data signals, downlink reference signals and so on). The received signal processing section 404 can include a signal processor, a signal processing circuit or signal processing apparatus that can be described based on general understanding of the technical field to which the present disclosure pertains. The received signal processing section 404 can constitute the receiving section according to the present disclosure.

The received signal processing section 404 outputs the decoded information acquired through the receiving processes to the control section 401. The received signal processing section 404 outputs, for example, broadcast information, system information, RRC signaling, DCI and so on, to the control section 401. The received signal processing section 404 outputs the received signals and/or the signals after the receiving processes to the measurement section 405.

The measurement section 405 conducts measurements with respect to the received signals. The measurement section 405 can include a measurer, a measurement circuit or measurement apparatus that can be described based on general understanding of the technical field to which the present disclosure pertains.

For example, the measurement section 405 may perform RRM measurement, CSI measurement, and so on, based on the received signal. The measurement section 405 may measure a received power (for example, RSRP), a received quality (for example, RSRQ, SINR, SNR), a signal strength (for example, RSSI), channel information (for example, CSI), and so on. The measurement results may be output to the control section 401.

### <Hardware Structure>

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these plurality of pieces of apparatus.

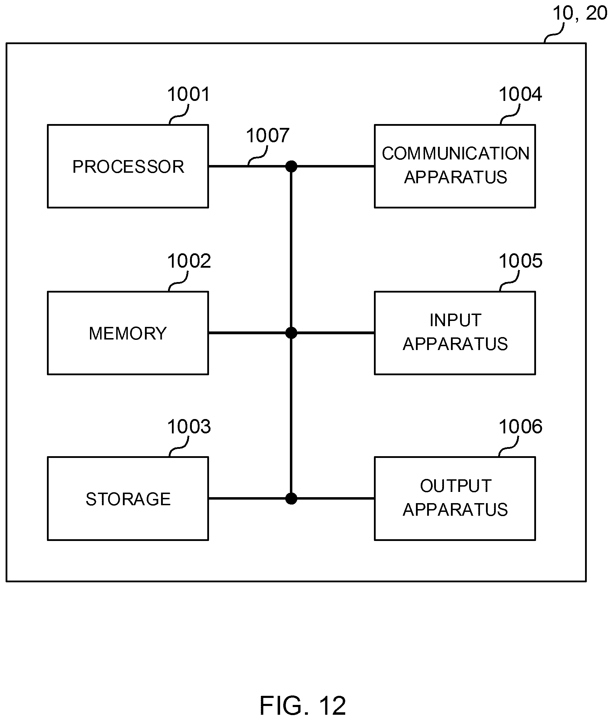

For example, the radio base station, the user terminal, and so on according to an embodiment may function as a computer that executes the process of each aspect according to an embodiment. FIG. 12 is a diagram to show an example of a hardware structure of the radio base station and the user terminal according to an embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007, and so on.

Note that, in the following description, the word "apparatus" may be interpreted as "circuit," "device," "unit," and so on. The hardware structure of the radio base station 10 and the user terminals 20 may be designed to include one or a plurality of apparatuses shown in the drawings, or may be designed not to include part of pieces of apparatus.

For example, although only one processor 1001 is shown, a plurality of processors may be provided. Furthermore, processes may be implemented with one processor or may be implemented at the same time, in sequence, or in different manners with one or more processors. Note that the processor 1001 may be implemented with one or more chips.

Each function of the radio base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and read and/or write data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so on from the storage 1003 and/or the communication apparatus 1004, into the memory 1002, and executes various processes according to these. As for the programs, programs to allow computers to execute at least part of the operations of the above-described embodiments are used. For example, the control section 401 of each user terminal 20 may be implemented by control programs that are stored in the memory 1002 and that operate on the processor 1001, and other functional blocks may be implemented likewise.

The memory 1002 is a computer-readable recording medium, and may be constituted with, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to an embodiment.

The storage 1003 is a computer-readable recording medium, and may be constituted with, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer, and so on in order to realize, for example, frequency division duplex (FDD) and/or time division duplex (TDD). For example, the above-described transmitting/receiving antennas 101 (201), amplifying sections 102 (202), transmitting/receiving sections 103 (203), transmission line interface 106, and so on may be implemented by the communication apparatus 1004.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, an LED (Light Emitting Diode) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the radio base station 10 and the user terminals 20 may be structured to include hardware such as a microprocessor, a digital signal processor (DSP), an ASIC (Application Specific Integrated Circuit), a PLD (Programmable Logic Device), an FPGA (Field Programmable Gate Array), and so on, and part or all of the functional blocks may be implemented by the hardware. For example, the processor 1001 may be implemented with at least one of these pieces of hardware.

### (Variations)

Note that the terminology used in this specification and/or the terminology that is needed to understand this specification may be replaced by other terms that convey the same or similar meanings. For example, "channels" and/or "symbols" may be replaced by "signals" ("signaling"). Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

Furthermore, a radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Furthermore, a slot may be constituted of one or a plurality of symbols in the time domain (OFDM (Orthogonal Frequency Division Multiplexing) symbols, SC-FDMA (Single Carrier Frequency Division Multiple Access) symbols, and so on). Furthermore, a slot may be a time unit based on numerology. A slot may include a plurality of mini-slots. Each mini-slot may be constituted of one or a plurality of symbols in the time domain. A mini-slot may be referred to as a "sub-slot."

A radio frame, a subframe, a slot, a mini-slot, and a symbol all express time units in signal communication. A radio frame, a subframe, a slot, a mini-slot, and a symbol may each be called by other applicable terms. For example, one subframe may be referred to as a "transmission time interval (TTI)," a plurality of consecutive subframes may be referred to as a "TTI" or one slot or one mini-slot may be referred to as a "TTI." That is, a subframe and/or a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, and/or codewords, or may be the unit of processing in scheduling, link adaptation, and so on. Note that, when TTIs are given, the time interval (for example, the number of symbols) to which transport blocks, code blocks and/or codewords are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe" and so on. A TTI that is shorter than a normal TTI may be referred to as a "shortened TTI," a "short TTI," a "partial or fractional TTI," a "shortened subframe," a "short subframe," a "mini-slot," a "sub-slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. Also, an RB may include one or a plurality of symbols in the time domain, and may be one slot, one mini-slot, one subframe, or one TTI in length. One TTI and one subframe each may be constituted of one or a plurality of resource blocks. Note that one or a plurality of RBs may be referred to as a "physical resource block (PRB (Physical RB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in this specification may be represented in absolute values or in relative values with respect to certain values, or may be represented in another corresponding information. For example, radio resources may be specified by certain indices.

The names used for parameters and so on in this specification are in no respect limiting. For example, since various channels (PUCCH (Physical Uplink Control Channel), PDCCH (Physical Downlink Control Channel), and so on) and information elements can be identified by any suitable names, the various names assigned to these individual channels and information elements are in no respect limiting.

The information, signals, and/or others described in this specification may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers and/or from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described herein, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs), and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as an "RRC message," and can be, for example, an RRC connection setup (RRCConnectionSetup) message, an RRC connection reconfiguration (RRCConnectionReconfiguration) message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using wired technologies (coaxial cables, optical fiber cables, twisted-pair cables, digital subscriber lines (DSL), and so on) and/or wireless technologies (infrared radiation, microwaves, and so on), these wired technologies and/or wireless technologies are also included in the definition of communication media.

The terms "system" and "network" as used in this specification are used interchangeably.

In the present specification, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or a plurality of (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of a base station and/or a base station subsystem that provides communication services within this coverage.

In the present specification, the terms "mobile station (MS)," "user terminal," "user equipment (UE)," and "terminal" may be used interchangeably.

A mobile station may be referred to as, by a person skilled in the art, a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

Furthermore, the radio base stations in this specification may be interpreted as user terminals. For example, each aspect/embodiment of the present disclosure may be applied to a configuration in which communication between a radio base station and a user terminal is replaced with communication among a plurality of user terminals (D2D (Device-to-Device)). In this case, the user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Actions which have been described in this specification to be performed by a base station may, in some cases, be performed by upper nodes. In a network including one or a plurality of network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments described in this specification may be used individually or in combinations, which may be switched depending on the mode of implementation. The order of processes, sequences, flowcharts, and so on that have been used to describe the aspects/embodiments herein may be re-ordered as long as inconsistencies do not arise. For example, although various methods described in this specification with various components of steps in exemplary orders, the specific orders that are illustrated herein are by no means limiting.

The aspects/embodiments described herein may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next-generation systems that are enhanced based on these.

The phrase "based on" (or "on the basis of") as used in this specification does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used herein does not generally limit the quantity or order of these elements. These designations may be used herein only for convenience, as a method for distinguishing between two or more elements. Thus, reference to the first and second elements does not imply that only two elements may be employed, or that the first element must precede the second element in some way.

The term "judging (determining)" as used herein may encompass a wide variety of actions. For example, "judging (determining)" may be interpreted to mean making "judgments (determinations)" about calculating, computing, processing, deriving, investigating, looking up (for example, searching a table, a database, or some other data structures), ascertaining, and so on. Furthermore, "judging (determining)" may be interpreted to mean making "judgments (determinations)" about receiving (for example, receiving information), transmitting (for example, transmitting information), input, output, accessing (for example, accessing data in a memory), and so on. In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

The terms "connected" and "coupled," or any variation of these terms as used herein mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In this specification, when two elements are connected, the two elements may be considered "connected" or "coupled" to each other by using one or more electrical wires, cables and/or printed electrical connections, and, as some non-limiting and non-inclusive examples, by using electromagnetic energy having wavelengths in radio frequency regions, microwave regions, (both visible and invisible) optical regions, or the like.

In this specification, the phrase "A and B are different" may mean that "A and B are different from each other." The terms "separate," "be coupled" and so on may be interpreted similarly.

When terms such as "including," "comprising," and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the invention defined by the recitations of claims. Consequently, the description herein is provided only for the purpose of explaining examples, and should by no means be construed to limit the present invention in any way.

### (Supplementary Note)

Hereinafter, supplementary notes of the present disclosure are added.

The present disclosure relates to the transmission of the uplink control information (UCI) by use of the UL shared channel (PUSCH (Physical Uplink Shared Channel)) for the UL transmission base on no uplink (UL) grant.

The UL grant is the downlink control information (DCI) including the PUSCH scheduling information (resource allocation information for the PUSCH), and is also referred to as the grant. The UL transmission based on no UL grant refers to that the user terminal transmits the UL signals (for example, the PUSCH) without scheduling by the radio base station (for example, gNB (gNodeB)).

The UCI may include at least one of the scheduling request (SR), retransmission control information for the DL data (DL data channel (for example PDSCH (Physical Downlink Shared Channel)) (a HARQ-ACK (Hybrid Automatic Repeat reQuest-Acknowledge), ACK/NACK (Negative ACK)), the channel state information (CSI), and information on the beam (for example, BI (Beam Index)).

(Problem): Hereinafter, problems will be described.

In a case that the UL transmission based on no UL grant is configured in the user terminal (UE (User Equipment)), the user terminal transmits the PUSCH on a resource configured for the UL transmission based on no UL grant.

On the other hand, as for piggybacking of the UCI to the PUSCH (transmission of the UCI by use of the PUSCH), the following issues are agreed: in slot-based scheduling, the UL data transmitted on the PUSCH is punctured for a HARQ-ACK of 2 bits or less (up to 2 bits). On the other hand, the UL data is rate-matched for a HARQ-ACK exceeding 2 bits (more than 2 bits).

With respect to the UL transmission based on the UL grant, a study is underway to provide an indication field for informing the user terminal of how the user terminal rate-matches the PUSCH (for example, the number of bits of the HARQ-ACK, a rate matching pattern, and the like). This is because if the rate matching pattern is not ensured (that is, if there is no indication in the UL grant), the radio base station (for example, gNB) needs to blind-decode the PUSCH in a plurality of expected (multiple possible) rate matching patterns.

However, with respect to the UL transmission based on no UL grant, there is no method for informing the user terminal of the rate matching pattern due to no UL grant. The radio base station is not sure whether or not the user terminal actually rate-matches the HARQ-ACK, and thus, needs to perform the blind-decoding in the multiple possible rate matching patterns.

(Proposal): Hereinafter, the proposals are described.

### (Proposal 1) The user terminal may necessarily rate-match the UL data in a certain rate matching pattern.

In Proposal 1, the rate matching pattern (or, an amount of rate-matched resources) may be configured for type 1 through RRC (Radio Resource Control) signaling (also referred to as higher layer signaling and the like). The rate matching pattern (or, an amount of rate-matched resources) may be indicated through L1 activation signaling or configured through RRC signaling for type 2.

Here, type 1 or 2 represents the type (kind) of the UL transmission based on no UL grant. The UL transmission of type 1 based on no UL grant is activated through RRC signaling. Te L1 signaling is not used in whole procedure of the UL transmission based on no UL grant. All required information is provided through RRC signaling (for example, reported from the radio base station to the user terminal).

The UL transmission of type 2 based on no UL grant is activated through L1 signaling (also referred to as physical layer signaling or DCI, and the like). The L1 signaling can indicate information on at least one of a resource for the UL transmission based on no UL grant, transmission power, and a pattern of a reference signal (RS) (RS pattern), and so on. This allows that information to be provided through L1 signaling, or be quickly adjusted by the resource or L1 signaling such as the reference signal.

In Proposal 1, in a case that there is a HARQ-ACK to be multiplexed on the PUSCH, the HARQ-ACK may be multiplexed on the resource where the UL data is rate-matched.

The UE may not expect that a HARQ-ACK exceeding a certain value is multiplexed.

The rate matching pattern (or, an amount of rate-matched resources) may be different between the HARQ-ACK and the CSI.

### (Proposal 2) The user terminal may puncture the UL data in the case that there is a HARQ-ACK, regardless of the number of bits of the HARQ-ACK to be multiplexed.

In Proposal 2, the puncture pattern (or, an amount of punctured resources) may depend on the number of bits of the HARQ-ACK. For example, as the number of bits of the HARQ-ACK increases, the amount of punctured resources may be increased.

With respect to the UL transmission based on no UL grant, the number of bits of the HARQ-ACK (of the punctured UL data) multiplexed on the PUSCH based on no UL grant may be 2 bits or less (up to 2 bits). The user terminal may not expect that the HARQ-ACK exceeding 2 bits is multiplexed with respect to the UL transmission based on no UL grant.

### (Proposal 3) With respect to the UL transmission based on no UL grant in the slot n+k (k ≧ 0), a HARQ-ACK corresponding to the PDSCH in the slots n, n-1, n-2, ... (that is, in or before the slot n) and a HARQ-ACK corresponding to the PDSCH in the slots n+1, n+2, ..., n+k (that is, after the slot n) may be handled differently.

In Proposal 3, as for the HARQ-ACK corresponding to the PDSCH in the slots n, n-1, n-2, ... (that is, in and before the slot n), if the number of bits of the HARQ-ACK is up to 2 bits, the UL data may be punctured, or if the number of bits of the HARQ-ACK is more than 2 bits, the UL data may be rate-matched.

As for the HARQ-ACK corresponding to the PDSCH in the slots n+1, n+2, ..., n+k (that is, after the slot n), the UL data may be punctured regardless of the number of bits of the HARQ-ACK.

In other words, in a case that the UL grant is received in the slot n, handling of the HARQ-ACK may be the same as that of the UL transmission based on the UL grant.

### (Proposal 4) The beta offset may be controlled based on a type of the UL data transmission based on no UL grant.

Here, the beta offset may be an offset value used for coding the UCI (channel coding). The beta offset may be configured for each UCI type (for example, HARQ-ACK and/or CSI).

In Proposal 4, with respect to the UL data transmission of type 1 based on no UL grant, the beta offsets for the HARQ-ACK and the CSI may be configured through RRC signaling, or the beta offset configured through RRC signaling with respect to the UL data based on the UL grant may be reused.

In Proposal 4, with respect to the UL data transmission of type 2 based on no UL grant, the beta offsets for the HARQ-ACK and the CSI may be configured through RRC signaling, or may be dynamically indicated in the UL grant, or may be specified through a combination of RRC signaling and L1 signaling.

Hereinafter, a description of an example of the structure according to the present disclosure is added. Note that the present invention is not limited to the following structures.

### [Structure 1]

A user terminal including:
a transmitting section that multiplexes uplink control information on an uplink shared channel to be transmitted independently from an uplink (UL) transmission indication from a radio base station and transmits the multiplexed resultant; and
a control section that adopts a certain transmission process configured in advance regardless of the number of bits of and/or a type of the uplink control information to control transmission of the uplink control information.

### [Structure 2]

The user terminal according structure 1, wherein the control section controls a rate matching process to be performed regardless of a type and/or the number of bits of the uplink control information.

### [Structure 3]

The user terminal according to structure 2, wherein the control section adopts a rate matching process using rate matching patterns and/or certain resource amounts different depending on the type and/or the number of bits of the uplink control information.

### [Structure 4]

The user terminal according to structure 1, wherein the control section controls a puncture pattern to be adopted based on the number of bits of a transmission confirmation signal and/or an amount of punctured resources.

### [Structure 5]

The user terminal according to any one of structures 1 to 4, wherein the control section expects that the number of bits of a transmission confirmation signal to be multiplexed is equal to or less than a certain value.

### [Structure 6]

The user terminal according to structure 1, wherein in a case that a transmission confirmation signal is multiplexed on the uplink shared channel to be transmitted at a certain timing independently from the uplink transmission indication from the radio base station, the process applied to each transmission confirmation signal is changed based on a reception timing of the downlink shared channel (PDSCH) corresponding to each transmission confirmation signal.

### [Structure 7]

A radio communication method including:
multiplexing uplink control information on an uplink shared channel to be transmitted independently from an uplink (UL) transmission indication from a radio base station and transmitting the multiplexed resultant; and
adopting a certain transmission process configured in advance regardless of the number of bits of and/or a type of the uplink control information to control transmission of the uplink control information.

The present application is based on Japanese Patent Application No. 2017-207616 filed on October 10, 2017. The entire contents of the application are incorporated herein by reference.

## Claims

1. A user terminal comprising:
a transmitting section that multiplexes uplink control information on an uplink shared channel to be transmitted independently from an uplink (UL) transmission indication from a radio base station and transmits the multiplexed resultant; and
a control section that adopts a certain transmission process configured in advance regardless of the number of bits of and/or a type of the uplink control information to control transmission of the uplink control information.

2. The user terminal according claim 1, wherein
the control section controls a rate matching process to be performed regardless of a type and/or the number of bits of the uplink control information.

3. The user terminal according to claim 2, wherein
the control section adopts a rate matching process using rate matching patterns and/or certain resource amounts different depending on the type and/or the number of bits of the uplink control information.

4. The user terminal according to claim 1, wherein
the control section controls a puncture pattern to be adopted based on the number of bits of a transmission confirmation signal and/or an amount of punctured resources.

5. The user terminal according to any one of claims 1 to 4, wherein
the control section expects that the number of bits of a transmission confirmation signal to be multiplexed is equal to or less than a certain value.

6. A radio communication method comprising:
multiplexing uplink control information on an uplink shared channel to be transmitted independently from an uplink (UL) transmission indication from a radio base station and transmitting the multiplexed resultant; and
adopting a certain transmission process configured in advance regardless of the number of bits of and/or a type of the uplink control information to control transmission of the uplink control information.
